(19) **Europäisches Patentamt European Patent Office Office européen des brevets**

(11) **EP 4 738 042 A1**

(12) **EUROPEAN PATENT APPLICATION**

(43) Date of publication:
06.05.2026 Bulletin 2026/19

(21) Application number: 25208236.7

(22) Date of filing: 13.10.2025

(51) International Patent Classification (IPC):
*G05D 1/485* (2024.01)    *G05D 1/85* (2024.01)
*G05D 109/25* (2024.01)    *G05D 1/654* (2024.01)

(52) Cooperative Patent Classification (CPC):
**G05D 1/6546; G05D 1/485; G05D 1/852;**
G05D 2109/25

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 01.11.2024 US 202418934577

(71) Applicant: Honeywell International Inc.
Charlotte, NC 28202 (US)

(72) Inventors:
• **CHEN, Shuai**
**Charlotte, 28202 (US)**
• **DING, Jiankun**
**Charlotte, 28202 (US)**
• **HE, Yingying**
**Charlotte, 28202 (US)**
• **ZHU, Xukai**
**Charlotte, 28202 (US)**

(74) Representative: **Ingrassia, Fisher & Lorenz UK Ltd.**
**Cambridge House**
**Henry Street**
**Bath BA1 1BT (GB)**

(54) **METHOD AND SYSTEM FOR LANDING A VTOL AIRCRAFT**

(57) System and related operating method are provided for landing an aircraft.

An exemplary method involves determining that an amount of available energy associated with an energy source onboard the aircraft is less than a predicted amount of energy required to land the aircraft in accordance with a flight plan or other procedure currently being flown.

Thereafter, the method automatically operates the aircraft to descend using an unregulated vertical speed and regulates an orientation of the aircraft to a reference orientation.

Thereafter, when the altitude of the aircraft is below a threshold, the method automatically operates the aircraft to descend using a different control scheme to regulate a lateral position of the aircraft to a lateral trajectory to a landing location while regulating a velocity of the aircraft using a cost function.

FIG. 2

**Description**

TECHNICAL FIELD

The subject matter described herein relates generally to aircraft systems, and more particularly, embodiments of the subject matter relate to control systems and methods for landing aircraft, such as vertical take-off and landing (VTOL) aircraft and other rotorcraft.

BACKGROUND

In some modern aircraft, traditional mechanical flight control systems have been replaced with electrically controlled actuators, often referred to as fly-by-wire. Instead of mechanical linkages between cockpit controls and flight control surfaces, propulsion systems and/or lift systems, electrical signals are utilized to communicate movements of cockpit controls to the controllers associated with the appropriate flight control components or systems. For example, vertical take-off and landing (VTOL) aircraft, such as unmanned aerial vehicles (UAVs), rotorcraft or other non-conventional aircraft, may include any number of different actuators or effectors arranged or distributed at various locations throughout the body of the aircraft and operated independently of one another to provide lift, propulsion, and/or attitude control for the aircraft (e.g., propellers, lift fans, rotors, flight control surface actuators, and/or the like).

Unlike fixed-wing aircraft, VTOL aircraft and other rotorcraft rely on rotors or other actuators or effectors to provide lift, which, in turn, can increase energy consumption. In particular, due to different payloads or meteorological conditions, there is a greater likelihood of rotorcraft having insufficient available energy or fuel required to provide sufficient lift to complete execution of a particular flight plan. For commercial applications, such as film shooting, aerial modeling, and agricultural observation, and the like, such as loss of lift could risk damaging cameras, film equipment or other expensive or fragile payloads. To avoid risk of damage to aircraft or payload, some approaches force landing of an aircraft using a fixed speed when the remaining energy may be insufficient to complete a flight. However, most existing approaches are conservative or inefficient from an energy consumption perspective while still suffering from potential vulnerability in response to an unexpected drop in the remaining available energy or other dynamic flight conditions. Accordingly, it is desirable to provide control methods and systems for improved efficiency when forcing landing of an aircraft without compromising viability of the aircraft or payload. Other desirable features and characteristics will become apparent from the subsequent detailed description and the appended claims, taken in conjunction with the accompanying drawings and the foregoing technical field and background.

BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Aircraft systems and related operating methods are provided. An exemplary method of landing an aircraft involves determining an amount of available energy associated with an energy source onboard the aircraft is less than a predicted amount of energy required to land the aircraft in accordance with a procedure based on a current state of the aircraft, thereafter automatically operating one or more actuators associated with the aircraft to descend using an unregulated vertical speed using a first control scheme to regulate an orientation of the aircraft to a reference orientation, and thereafter, when an altitude of the aircraft is below a threshold, automatically operate the one or more actuators associated with the aircraft to descend using a second control scheme different from the first control scheme to regulate a lateral position of the aircraft to a trajectory to a landing location while regulating a velocity of the aircraft using a cost function.

An apparatus is also provided for a non-transitory computer-readable medium having computer-executable instructions stored thereon that, when executed by a processing system, cause the processing system to determine an amount of available energy associated with an energy source onboard an aircraft is less than a predicted amount of energy required to land the aircraft based on a current state of the aircraft, thereafter automatically operate the aircraft to descend in an unregulated descent operating mode configurable to regulate an orientation of the aircraft to a reference orientation, and after detecting a transition condition, automatically operate the aircraft in a controlled slow-down operating mode configurable to regulate a lateral position of the aircraft to a trajectory to a landing location while regulating a velocity of the aircraft using a cost function.

An exemplary embodiment of an aircraft system is also provided. The aircraft system includes an actuation system associated with one or more flight control components of an aircraft, one or more avionics systems onboard the aircraft to provide data indicative of a current state of the aircraft, one or more sensor systems to provide measurement data indicative of an amount of available energy associated with an energy source onboard the aircraft, and a flight control module coupled to the actuation system, the one or more avionics systems and the one or more sensor systems. The flight control module is configurable to detect when the amount of available energy associated with the energy source onboard the aircraft is less than a predicted amount of energy required to land the aircraft based on the current state of the aircraft, and thereafter automatically operate the actuation system in accordance with an unregulated descent operating mode configurable to regulate an orientation of the aircraft to a reference orientation, and after detecting a transition condition, automatically operate the actuation system in accordance with a controlled slow-down operating mode configurable to regulate a lateral position of the aircraft to a trajectory to a landing location while regulating a velocity of the aircraft using a cost function.

Furthermore, other desirable features and characteristics of the subject matter described herein will become apparent from the subsequent detailed description and the appended claims, taken in conjunction with the accompanying drawings and the preceding background.

BRIEF DESCRIPTION OF DRAWINGS

The present disclosure will hereinafter be described in conjunction with the following drawing figures, wherein like numerals denote like elements, and wherein:

FIG. 1 is a block diagram illustrating a system suitable for use with an aircraft such in accordance with one or more exemplary embodiments;
FIG. 2 is a flow diagram of an exemplary embodiment of a forced landing process suitable for implementation by a control system in the system of FIG. 1 in accordance with one or more embodiments; and
FIG. 3 depicts an exemplary multi-rotor rotorcraft system suitable for implementation by an aircraft in the system of FIG. 1 in connection with an exemplary implementation of the forced landing process of FIG. 2.

DETAILED DESCRIPTION

The following detailed description is merely exemplary in nature and is not intended to limit the subject matter of the application and uses thereof. Furthermore, there is no intention to be bound by any expressed or implied theory presented in the preceding technical field, background, brief summary, or the following detailed description.

Embodiments of the subject matter described herein relate to forced or managed landing of an aircraft using an energy prolongation landing procedure when an amount of available energy associated with an energy source onboard the aircraft is less than a predicted amount of energy required to complete execution of a flight plan or otherwise land the aircraft in a predetermined manner. For purposes of explanation, the subject matter is described herein primarily in the context of aircraft where flight control components are controlled using electrical signals provided by an electrical energy source, such as a battery, a fuel cell, or the like; however, the subject matter is not necessarily limited to use with electrically-powered aircraft and may be implemented in an equivalent manner in the context of other types of energy sources, including gasoline or other fuel. Additionally, exemplary embodiments may be described herein in the context of rotary-wing aircraft or rotorcraft, such as urban air mobility (UAM) vehicles or other vertical takeoff and landing (VTOL) aircraft, that include various actuation systems that actuate or otherwise operate flight control components which provide lift, propulsion, and/or attitude control for the aircraft, such as, for example, a flight control surface actuator, lift fan, motor, or similar flight control component capable of adjusting or otherwise influencing a position or orientation of the aircraft.

As described in greater detail below, in exemplary embodiments, a control system associated with the aircraft is configurable to dynamically predict the amount of energy required to complete execution of a current flight plan or otherwise land the aircraft using a predetermined landing procedure and continually monitor the amount of remaining energy available onboard the aircraft to detect or otherwise identify when the amount of available energy associated with an energy source onboard the aircraft is less than the predicted amount of energy required to land the aircraft. In response to detecting a forced landing condition when the amount of available energy is less than the predicted amount of energy required, the control system implements an energy prolongation landing procedure by automatically and autonomously operating one or more actuators associated with the aircraft in an unregulated descent operating mode using a control scheme that allows the aircraft to descend using an unregulated (and thereby potentially variable) vertical speed for a temporary duration of time while regulating an orientation of the aircraft to a reference orientation to maintain stability of the aircraft. In this regard, during the initial phase of the energy prolongation landing procedure, one or more actuators associated with the aircraft are not operated to provide lift or otherwise consume energy, allowing the aircraft to effectively free-fall temporarily, thereby conserving energy consumption while maintaining stability of the aircraft.

For example, in one or more implementations, the unregulated descent operating mode utilizes a closed-loop proportional-integral-derivative (PID) control scheme to obtain inertial measurement data (e.g., current roll, pitch and yaw angles) from one or more onboard sensors and determine corresponding actuation commands for the flight control components or other actuators of the aircraft to control actuation and regulate the orientation of the aircraft to a level flight orientation. In this manner, the control system automatically and autonomously regulates the pitch of the aircraft to a zero pitch orientation and regulates the roll of the aircraft to a zero roll orientation to maintain level flight for stability purposes while otherwise allowing the aircraft to temporarily free-fall and thereby conserves energy that would otherwise be required to control or regulate the vertical speed.

While operating the aircraft in an unregulated descent operating mode, the control system continually monitors one or more onboard systems to detect or otherwise identify a condition for transitioning operation from the unregulated descent operating mode to a controlled slow-down operating mode that is configurable to reduce the vertical speed of the aircraft in a manner that attempts to minimize energy consumption. For example, in one or more implementations, the control system identifies a transition condition when the current altitude falls below a transition altitude threshold, and thereafter utilizes a control scheme for the slow-down operating mode that is configurable to minimize the three-dimensional velocity of the aircraft at touchdown. In this regard, transitioning from the unregulated descent operating mode to the slow-down operating mode when the aircraft is closer to ground reduces the likelihood of damage to the aircraft or payload. At the same time, by delaying the use of energy to regulate the vertical speed of the aircraft until the aircraft is closer to ground, the likelihood of maintaining control and ability to provide lift until landing the aircraft is also increased.

In one or more exemplary implementations, the slow-down operating mode control scheme is configurable to minimize the three-dimensional velocity of the aircraft at touchdown using a cost function that is configured to minimize energy consumption. For example, the controlled slow-down operating mode control scheme may be implemented using a model predictive control (MPC) scheme that is configurable to determine actuation commands for the flight control components or other actuators of the aircraft regulate a predicted position of the aircraft to a targeted trajectory to a targeted landing location while regulating a velocity of the aircraft using the cost function to minimize the energy consumption. In this regard, in exemplary implementations, the MPC scheme regulates a predicted vertical speed of the aircraft to be less than or equal to a reference vertical speed, and in some implementations, attempts to regulate the predicted vertical speed of the aircraft to be zero at the predicted position along the targeted trajectory corresponding to touchdown at the landing location.

In various implementations, the energy prolongation landing procedure may be dynamically utilized to augment or otherwise supplement another landing procedure. For example, during execution of a flight plan, when the amount of remaining energy available is less than the amount of energy expected to be required to complete execution of the current flight plan, the control system may initially transition the aircraft to a forced landing operating mode that utilizes a fixed reference vertical speed while autonomously operating the flight control components or other actuators of the aircraft to descend with the fixed reference vertical speed while regulating the lateral position of the aircraft to a target trajectory to a targeted landing location for the aircraft. Thereafter, control system continually monitors the remaining available energy to detect when the amount of remaining energy available is less than the amount of energy expected to be required to complete execution of the fixed reference vertical speed landing procedure, for example, due to meteorological conditions or other dynamic conditions that impact the amount of energy required to fly the aircraft along the desired trajectory to the targeted landing location. In response to detecting the remaining amount of available energy is less than the predicted amount required to fly the fixed reference vertical speed landing procedure, the control system automatically transitions to the energy prolongation landing procedure to conserve energy and increase the likelihood of the landing the aircraft without damaging the aircraft or payload while attempting to adhere to the target trajectory to the targeted landing location.

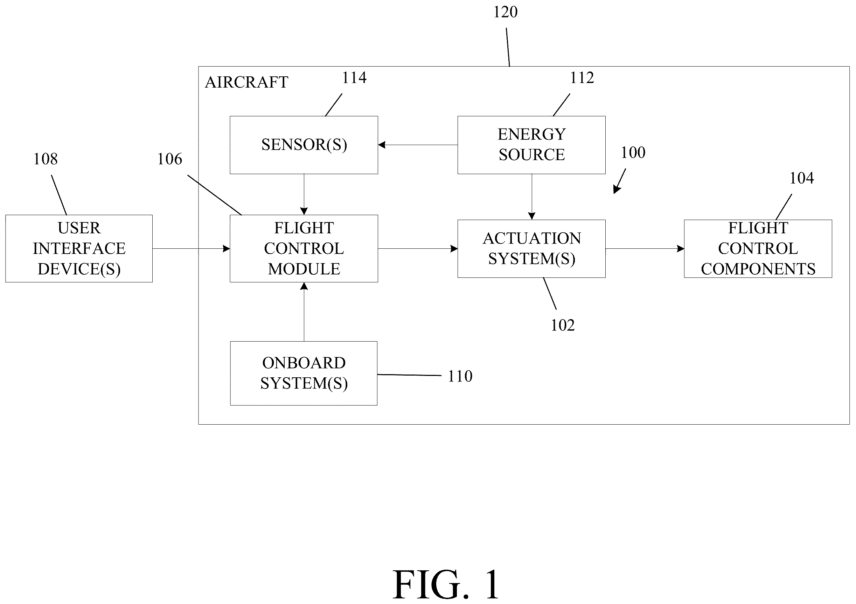

FIG. 1 depicts an exemplary embodiment of a system 100 suitable for use with a vehicle such as an aircraft 120. In exemplary implementations, the system 100 is realized as a fly-by-wire system for an aircraft 120 realized as a UAM vehicle, a VTOL aircraft, or another aircraft that includes multiple different actuation systems 102 that are operable to control or otherwise manage respective flight control components 104 (e.g., propellers, lift fans, flight control surfaces and/or the like) distributed about the body of the aircraft 120, and thereby, control the position, orientation and/or attitude of the aircraft 120. In exemplary implementations, each actuation system 102 manages a unique flight control component 104 (or a set of flight control components) that is different from those flight control components 104 managed by other actuation systems 102. That said, in practice, some implementations may employ redundancy, where more than one actuation system 102 is capable of operating a common flight control component 104.

The actuation systems 102 are communicatively coupled to a flight control module 106, which generally represents the processing system, processing device, hardware, circuitry, logic, software, firmware and/or other components of the fly-by-wire system 100 that are configured to receive signals indicative of a sensed or measured position, orientation, or adjustment to user interface devices 108 associated with the aircraft 120 and convert the inputs or adjustments received at the user interface devices 108 into corresponding command signals for one or more flight control components 104 and output or otherwise provide the command signals to the actuation systems 102. For purposes of explanation, the flight control module 106 may alternatively be referred to herein as a flight control computer (FCC). The flight control computer 106 may be implemented or realized using any suitable processing system and/or device, such as, for example, one or more processors, central processing units (CPUs), controllers, microprocessors, microcontrollers, processing cores and/or other hardware computing resources configured to support the operation described herein. In this regard, each flight control computer 106 may include or access a data storage element (or memory) capable of storing programming instructions for execution that, when read and executed by the flight control computer 106, cause the flight control computer 106 to support operations of the fly-by-wire system 100. In practice, some implementations may employ redundancy, where multiple different instances of the flight control computer 106 independently determine and provide redundant command signals to an actuation system 102 concurrently.

Depending on the implementation, the user interface device(s) 108 may be external to the aircraft 120 (e.g., as part of a remote control device that wirelessly communicates with the flight control module 106) in the context of a UAV or other unmanned aircraft, or alternatively, in the context of a manned aircraft, the user interface devices 108 may be realized as one or more cockpit user interface devices onboard the aircraft 120. In this regard, the user interface device(s) 108 may be realized as a joystick, lever, switch, knob, line select key, touch panel (or touchscreen), keypad, touchpad, keyboard, mouse or another suitable device adapted to receive input from a user. For example, the user interface devices 108 may be realized as joysticks including one or more sets of sensors configured to sense the position of a respective joystick in a reference direction (e.g., a horizontal or x-reference direction, a vertical or y-reference direction and/or the like), with corresponding indicia of the user input position of the respective joystick being provided to the flight control computer 106. That said, it should be noted that although the subject matter may be described herein primarily in the context of pilot inputs or other input received via user interface devices 108 utilized to operate flight control components 104 in fly-by-wire aircraft 120, the subject matter described herein is not intended to be limited to any particular type of input to the flight control computer 106, and may be utilized in the context of any other type of measurement or command data (e.g., flight plan data) that may be input to a flight control module 106 for purposes of determining commands for operating the flight control components 104. Accordingly, the subject matter may be implemented in an equivalent manner for autonomously or remotely controlled aircraft.

In practice, onboard systems 110 are communicatively coupled to the flight control computer 106 to provide real-time data and/or information regarding the operation of the aircraft 120 to the flight control computer 106 for analysis in conjunction with the user input received via the user interface device(s) 108. For example, in the context of an aircraft 120, the onboard systems 110 may include one or more avionics systems that support navigation, flight planning, and other aircraft control functions, and in practice, will likely include one or more of the following avionics systems suitably configured to support operation of the aircraft: a flight management system (FMS), a navigation system, a communications system, an autopilot system, an autothrust system, a weather system, an air traffic management system, a radar system, a traffic avoidance system, hydraulics systems, pneumatics systems, environmental systems, electrical systems, engine systems, trim systems, lighting systems, crew alerting systems, electronic checklist systems, an electronic flight bag and/or another suitable avionics system. Based on the data or information received from the respective onboard systems 110 and the user input to a respective user interface device 108, the flight control computer 106 commands for controlling the position of or otherwise operating one or more of the flight control components 104 to adjust the position and/or attitude of the aircraft 120.

During normal manual operation of the aircraft, the flight control computer 106 continually analyzes the outputs of the user interface devices 108 and the onboard avionics systems 110 to determine corresponding commands for how the respective flight control components 104 should be operated in response to adjustments or changes to the user interface devices 108 substantially in real-time. In this regard, in exemplary implementations, the flight control computer 106 calculates or otherwise determines a rate or amount of actuation associated with a particular flight control component 104 to adjust the position and/or attitude of the aircraft 120 in a manner corresponding to the user input received via a user interface device 108 and provides a corresponding command signal to the actuation system 102 associated with that flight control component 104 to effectuate the received user input. For example, the flight control computer 106 calculates or otherwise determines a desired rate and direction of actuation for a motor or other actuator associated with a actuation system 102 to produce the desired actuation of the flight control component(s) 104 associated with that actuation system 102 to adjust the position and/or attitude of the aircraft 120 in the desired manner and provides a corresponding command signal to the actuation system 102 for implementation.

Still referring to FIG. 1, in exemplary embodiments, the actuation systems 102 are coupled to an energy source 112 that provides electrical power for operating the actuation systems 102 and thereby actuating the flight control components 104. For example, the energy source 112 may be realized as a battery (or battery pack), a fuel cell, or another suitable source of electrical energy. That said, it should be appreciated that the subject matter described herein is not limited to electrical energy sources or any particular type of energy source 112 and may be implemented in an equivalent manner in the context of an energy source 112 that utilizes gasoline or any other sort of fuel. In exemplary implementations, the flight control computer 106 is coupled to one or more sensors 114 associated with energy source 112 to receiver or otherwise obtain measurement data indicative of the current state of the energy source 112 and the remaining amount of available energy that the energy source 112 is capable of providing. For example, in the context of the energy source 112 being realized as a battery or battery pack, the sensor(s) 114 may be realized as one or more state of charge (SOC) sensors that provide measurement data indicative of the current SOC of the energy source 112. As another example, in the context of a fuel-based energy source 112, the sensor(s) 114 may be realized as one or more fuel sensors that provide measurement data indicative of the current amount of fuel remaining onboard the aircraft 120. Based on the measurement data from the energy source sensor(s) 114, the flight control computer 106 can calculate or otherwise determine the remaining amount of energy available associated with the energy source 112 onboard the aircraft 120.

As described in greater detail below, the flight control computer 106 continually monitors the output of the energy source sensor(s) 114 to detect or otherwise identify when the remaining amount of available energy falls below a predicted or estimated amount of energy to be required to complete execution of the current flight plan or other procedure currently being flown by the aircraft 120. When the remaining amount of available energy falls below the predicted amount of energy required by the aircraft 120, the flight control computer 106 automatically initiates and executes a forced landing procedure to attempt to safely land the aircraft 120 that minimizes the likelihood of damage to the aircraft 120 or payload. In this regard, depending on meteorological conditions or other dynamic factors, the flight control computer 106 may automatically initiate an energy prolongation landing procedure to conserve the remaining available energy at the energy source 112 by transitioning operation of the aircraft 120 to an unregulated descent operating mode for a temporary duration of time.

As described above and in greater detail below, in the unregulated descent operating mode, the flight control computer 106 determines actuation commands for regulating the attitude of the aircraft 120 to a level flight orientation while otherwise allowing the aircraft 120 to descent or rotate in an unregulated or uncontrolled manner to reduce altitude and potential energy of the aircraft 120 while conserving energy at the energy source 112. In this regard, in exemplary implementations, the onboard systems 110 include an inertial reference system (IRS), an inertial measurement unit (IMU), or some other combination of accelerometers, gyrometers and/or the like configurable to provide inertial measurement data for the aircraft 120 indicative of the current roll, pitch and yaw of the aircraft 120 to allow the flight control computer 106 to determine corresponding actuation commands for operating the flight control components 104 via the actuation systems 102 to regulate the current roll and pitch of the aircraft 120 to the zero roll and zero pitch reference orientation for the aircraft 120 to maintain lateral stability without regulating the vertical speed of the aircraft 120. After the initial phase of the energy prolongation landing procedure, the flight control computer 106 transitions to a controlled slow-down operating mode to determine actuation commands for operating the flight control components 104 that attempt to minimize the velocity of the aircraft 120 upon touchdown while concurrently attempting to minimize the consumption of energy from the energy source 112.

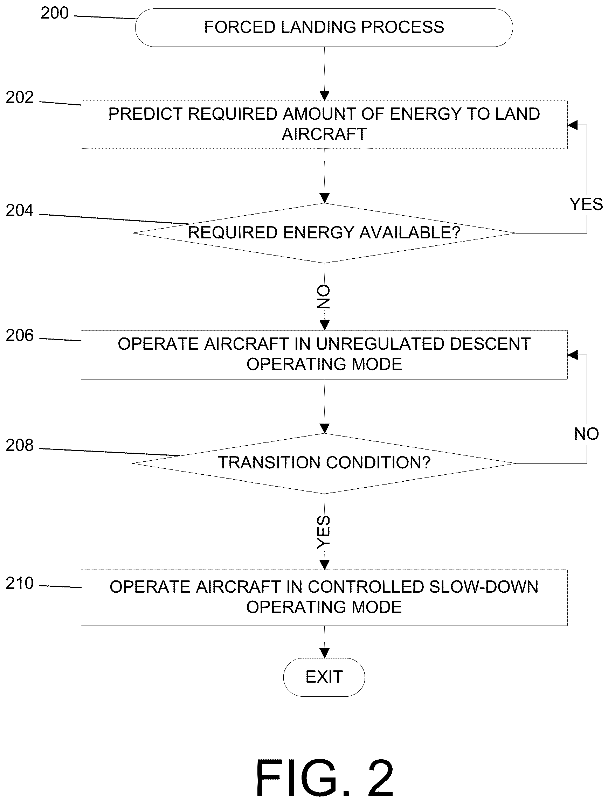

FIG. 2 depicts an exemplary forced landing process 200 suitable for implementation by a control system associated with an aircraft to autonomously and automatically operate one or more actuation systems associated with the rotors, blades or other flight control components associated with the aircraft to land the aircraft in a manner that improves the likelihood of successful outcomes while conserving available energy and prolonging the ability to maintain control of the aircraft. The various tasks performed in connection with the illustrated process may be implemented using hardware, firmware, software executed by processing circuitry, or any combination thereof. For illustrative purposes, the following description may refer to elements mentioned above in connection with FIG. 1. In practice, portions of the forced landing process 200 may be performed by different elements of a vehicle system. That said, exemplary embodiments are described herein in the context of the forced landing process 200 being primarily performed by the flight control computer 106. It should be appreciated that the forced landing process 200 may include any number of additional or alternative tasks, the tasks need not be performed in the illustrated order and/or the tasks may be performed concurrently, and/or the forced landing process 200 may be incorporated into a more comprehensive procedure or process having additional functionality not described in detail herein. Moreover, one or more of the tasks shown and described in the context of FIG. 2 could be omitted from a practical embodiment of the forced landing process 200 as long as the intended overall functionality remains intact.

Referring to FIG. 2 with continued reference to FIG. 1, the illustrated forced landing process 200 initializes or otherwise begins by calculating, determining or otherwise estimating a predicted amount of energy likely to be required to land the aircraft in accordance with the current operating mode of the aircraft and monitoring the current amount of remaining energy available onboard the aircraft to automatically detect or otherwise identify when the remaining amount of available energy falls below the predicted amount of energy (tasks 202, 204). In this regard, the flight control computer 106 may receive or otherwise obtain, from one or more onboard systems 110 or sensors 114, status information indicative of the current state of the aircraft 120 including, but not limited to, the current geographic location of the aircraft 120, the current altitude of the aircraft 120, the current speed of the aircraft 120, the current heading of the aircraft 120, the current aircraft configuration, the current engine status, current battery status, current fuel remaining, and/or the like. Based on the current state of the aircraft with respect to the current flight plan, procedure or other operating mode being utilized to control the aircraft 120, the flight control computer 106 calculates, estimates or otherwise predicts the amount of energy likely to be consumed by the aircraft 120 to traverse the remaining portion of the flight plan being flown or otherwise complete execution of the particular procedure or operating mode being utilized to control the aircraft 120. For example, when the aircraft 120 is currently being flown on autopilot or some other autonomous operating mode along a current flight plan, the flight control computer 106 may predict the amount of energy required for the aircraft 120 to traverse the remainder of the lateral and vertical trajectories of the current flight plan from the current geographic location, altitude and heading of the aircraft 120 to the desired landing location defined by the flight plan given the current speed and configuration of the aircraft 120. Alternatively, if the aircraft 120 is currently being flown in accordance with a fixed reference vertical speed landing procedure, the flight control computer 106 may predict the amount of energy required for the aircraft 120 to maintain the vertical speed of the aircraft 120 at or below the fixed reference vertical speed while descending and traversing the lateral trajectory to the desired landing location associated with the fixed reference vertical speed landing procedure. In this regard, it should be appreciated that the subject matter described herein is not necessarily limited to any particular procedure or mode of operation prior to initiating execution of energy prolongation landing procedure.

In exemplary implementations, the flight control computer 106 receives or otherwise obtains measurement data indicative of the current amount of remaining energy available onboard the aircraft 120 from one or more energy source sensor(s) 114 and continually monitors the relationship between the current amount of remaining energy available and the predicted amount of energy required for landing the aircraft in accordance with the current operating mode from the current aircraft state. In this regard, meteorological conditions or other dynamic factors may cause the aircraft 120 to consume more energy over time than initially predicted, which, in turn, may result in the current amount of remaining energy available onboard the aircraft 120 falling below the amount expected to be required for the aircraft 120 to successfully complete the current flight plan or other procedure currently being flown. When the flight control computer 106 detects the remaining amount of available energy onboard the aircraft 120 falls below the predicted amount of energy required to land the aircraft 120 in accordance with the current operating mode, the flight control computer 106 automatically initiates an energy prolongation landing procedure as part of the forced landing process 200 to land the aircraft 120 in a manner that increases the likelihood of successfully landing the aircraft 120 in a manner that minimizes potential damage to the aircraft 120 or payload.

Still referring to FIG. 2, after determining to initiate an energy prolongation landing procedure based on the remaining amount of available energy, the forced landing process 200 automatically and autonomously operates the aircraft in an unregulated descent operating mode for a temporary duration of time corresponding to an initial phase of the energy prolongation landing procedure until detecting a transition condition for entering a controlled slow-down operating mode (tasks 206, 208). In the unregulated descent operating mode, the flight control computer 106 determines actuation commands for operating the actuation systems 102 that are merely intended to maintain lateral stability of the aircraft 120 without regulating the vertical speed or lateral position of the aircraft 120. Thus, energy that might otherwise be consumed to control or regulate the lateral position or vertical speed of the aircraft 120 is preserved, thereby conserving energy and prolonging the remaining duration of time during which the energy source 112 may be capable of providing energy to the actuation systems 102. For example, the flight control computer 106 may temporarily utilize a closed-loop PID control scheme to concurrently regulate the roll and pitch of the aircraft 120 to zero by reversing the rotational direction of the rotors while allowing the yaw and translational parameters (e.g., position, speed and acceleration) to float or vary. As a result, the aircraft 120 may effectively free-fall in level flight, thereby allowing the vertical speed of the aircraft 120 to approach or reach a terminal velocity in descent while avoiding a vortex ring state and maintaining ability to resume control of the aircraft 120. Once the terminal velocity is reached, the upward forces of drag or air resistance on the aircraft 120 maintains the kinetic energy of the aircraft 120 substantially constant while the potential energy of the aircraft 120 continually decreases as the aircraft 120 descends in altitude.

In exemplary implementations, the flight control computer 106 maintains operation of the aircraft 120 in the unregulated descent operating mode to continue reducing the potential energy of the aircraft 120 until detecting or otherwise identifying a transition condition where it is desirable to resume control of the aircraft 120 to reduce the kinetic energy of the aircraft 120 prior to touchdown. In this regard, in some implementations, the flight control computer 106 may detect a transition condition when the current altitude of the aircraft 120 falls below a threshold altitude value. For example, based on the current aircraft configuration, weight, drag coefficient, and potentially other factors, the flight control computer 106 may calculate or otherwise determine a transition altitude threshold value corresponding to an estimated amount of altitude required to reduce the kinetic energy of the aircraft 120 to be at or below an energy threshold for landing the aircraft 120 (e.g., based on the current vertical speed or descent rate, the terminal velocity of the aircraft 120, the current weight of the payload and/or the aircraft 120, and/or the like). In this regard, in some implementations, the transition altitude threshold value may dynamically vary between different flights or different instances of the aircraft 120. That said, in other implementations, the transition altitude threshold value may be realized as a fixed value. It should be noted that the transition condition is not necessarily limited to altitude, and in practice, the flight control computer 106 may continually analyzing any number of different aircraft state parameters to detect a transition condition based on the current measurement data or status information for a particular parameter with respect to a corresponding threshold for that parameter, and the subject matter described herein is not necessarily limited to any particular parameter or threshold for detecting a transition condition. For example, in some implementations, the flight control computer 106 may identify a transition condition in response to detecting the current state of charge of the energy source 112 is less than a transition threshold level (e.g., due to an abnormally high rate of energy consumption) where it is desirable to use the remaining available energy to reduce the kinetic energy of the aircraft 120.

Referring again to FIG. 2, after detecting the transition condition, the forced landing process 200 transitions to a second phase of the energy prolongation landing procedure and automatically and autonomously operates the aircraft in a controlled slow-down operating mode to reduce the kinetic energy of the aircraft prior to touchdown (task 210). In the controlled slow-down operating mode, the flight control computer 106 determines actuation commands for operating the actuation systems 102 that are intended to reduce the vertical speed or velocity of the aircraft 120 while concurrently attempting to minimize energy consumption and avoid a vortex ring state. In exemplary implementations, the flight control computer 106 utilizes a MPC control scheme to that attempts to minimize the predicted vertical speed of the aircraft at touchdown while regulating the position of the aircraft 120 laterally along a targeted trajectory in a manner that avoids a vortex ring state while attempting to minimize energy consumption. In this regard, in the controlled slow-down operating mode, the flight control computer 106 determines actuation commands for operating the actuation systems 102 to rotate the rotors or otherwise actuate the flight control components 104 in a direction or manner that provides upward lift while allowing the roll or pitch of the aircraft 120 to vary and allow the aircraft 120 to tip and move laterally to avoid or otherwise escape a potential vortex ring state. That said, in situations where the aircraft 120 is manned, the MPC control scheme may be configured to regulate the predicted orientation of the aircraft 120 at touchdown to be upright or otherwise stable laterally (e.g., by regulating the predicted roll and pitch at touchdown to zero).

By virtue of the energy prolongation landing procedure, the forced landing process 200 dissipates potential energy while reducing energy consumption by using the unregulated descent operating mode until reaching a transition condition where it is desirable to reduce kinetic energy prior to touchdown. By conserving energy during the unregulated descent operating mode, the forced landing process 200 increases the likelihood that the remaining amount of available energy upon entering the controlled slow-down operating mode will be sufficient to allow the flight control computer 106 to reduce the vertical speed to zero at the touchdown location or otherwise minimize the velocity of the aircraft 120 at touchdown, thereby increasing the likelihood of successfully landing the aircraft 120. Moreover, by conserving energy and prolonging the ability of the flight control computer 106 to be able to operate the actuation systems 102 to provide lift and control the aircraft 120, a vortex ring state can also be avoided during the controlled slow-down operating mode.

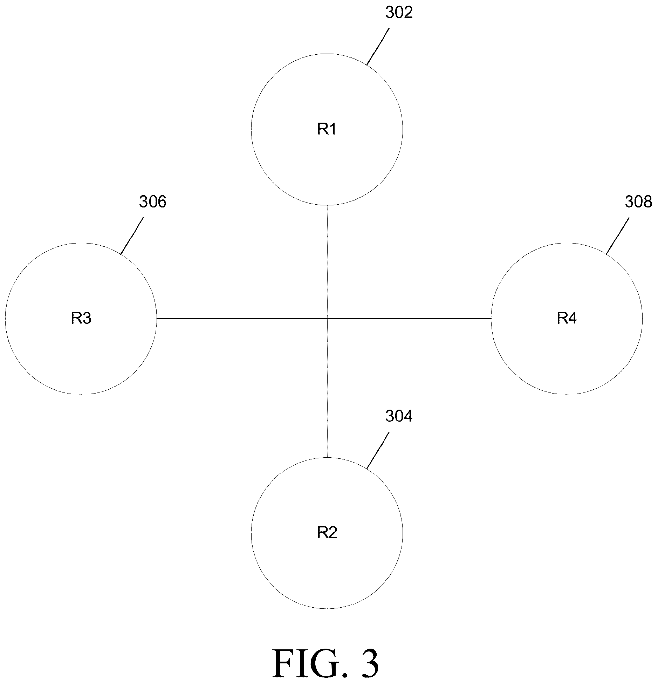

Referring to FIG. 3, in an exemplary implementation, the aircraft 120 is a rotary-wing UAV with a multi-rotor rotorcraft system 300, where the flight control components 104 are realized as multiple rotors 302, 304, 306, 308 distributed about the body of the aircraft 120. It should be appreciated that although FIG. 3 depicts a simplified rotorcraft system 300 corresponding to a four rotary-wing UAV, the subject matter is not limited to any number or configuration of rotors.

Referring to FIG. 3 with continued reference to FIGS. 1-2, in the first stage or phase of the energy prolongation landing procedure of the forced landing process 200, the flight control computer 106 utilizes a closed-loop PID control scheme in an unregulated descent operating mode with the goal of maintain the UAV upright, rather than regulating the descent rate or vertical speed, thereby allowing the UAV to effectively free-fall while remaining vertical. As described above, power savings are achieved because uniform falling will occur in the free fall condition when the force of air friction equals the weight of the UAV, thereby reducing potential energy while maintaining kinetic energy constant upon reaching terminal velocity.

In an exemplary implementation, the controls or outputs for the respective rotors 302, 304, 306, 308 in the four-rotor rotorcraft system 300 can be governed by the following equations:

$$PID_{output_{pitch}} = K_p e_{pitch} + K_i \int e_{pitch} \, dt + K_d \frac{d \, e_{pitch}}{dt};$$

$$PID_{output_{roll}} = K_p e_{roll} + K_i \int e_{roll} \, dt + K_d \frac{d \, e_{roll}}{dt};$$

$$R1_{output} = V_{R1} + PID_{output_{pitch}};$$

$$R2_{output} = V_{R2} - PID_{output_{pitch}};$$

$$R3_{output} = V_{R3} + PID_{output_{roll}};$$

and

$$R4_{output} = V_{R4} - PID_{output_{roll}},$$

where the $e_{pitch}$ and $e_{roll}$ is the error on pitch and roll of Euler angles, that is, the current pitch and roll of the aircraft 120 relative to the zero pitch and zero roll reference orientations. In this regard, the difference in lift between the R1 rotor 302 and the R2 rotor 304 can control the pitch angle of the UAV, the difference in lift between the R3 rotor 306 and the R4 rotor 308 can control the roll angle of the UAV, and the initial speed of four rotors can be zero or otherwise less than a threshold that will let UAV free fall.

In the second stage or phase of the energy prolongation landing procedure of the forced landing process 200, the flight control computer 106 utilizes an MPC control scheme in a controlled slow-down operating mode. In practice, the MPC control scheme may utilize a cost function that dictates the tradeoff or relationship between minimizing the vertical speed or descent rate of the UAV at touchdown and minimizing the energy consumption during the controlled slow-down operating mode. To support the MPC control scheme, a dynamic model of the UAV is developed that is representative of the aerodynamic characteristics, rotor dynamics, and the like associated with the UAV. For purposes of explanation, the dynamic models can be derived or represented using equation $x(k + 1) = Ax(k) + Bu(k)$, where $x(k)$ is a vector representing the current translational state of the UAV (e.g., the current translational positions $(x, y, z)$ and the current translational velocities $(v_x, v_y, v_z)$ obtained from one or more onboard systems 110), $u(k)$ represents the energy consumption corresponding to the current lift forces provided by the rotors 302, 304, 306, 308 in the translational directions $(x, y, z)$, and $A$ and $B$ are matrices representing the modeled dynamics of the UAV to translate the current lift forces $u(k)$ applied at a current state of the UAV $x(k)$ to a future state of the UAV, $x(k + 1)$. An objective function for minimizing velocity at touchdown while concurrently minimizing energy consumption may be represented by cost function equation

$$J = \sum_{i=0}^{N} x^T(k)Qx(k) + \sum_{i=0}^{N-1} x^T(k)Ru$$ , where $Q$ is the state weight matrix and $R$ is the control weight matrix that respectively dictate the tradeoff between vehicle state and power consumption, $J$ represents the cost to be minimized, and $N$ is the number of states into the future over which the cost function is optimized.

During the controlled slow-down operating mode, the initial current status information for the UAV is obtained from the onboard systems 110 for initializing the state vector $x(k)$, with the origin of the $x, y$ and $z$ reference axes being defined by the targeted or desired landing location for the UAV to regulate the future position of the UAV to the desired landing location. Depending on the implementation, the landing location may be identified from a preceding operating mode (e.g., the destination location associated with the flight plan, the landing location associated with the fixed reference vertical speed landing procedure, or the like), or dynamically determined in real-time upon entering the controlled slow-down operating mode. In this regard, in some exemplary implementations, the flight control computer 106 may automatically identify a landing location that would result in a lateral trajectory from the current position of the aircraft 120 to the landing location suitable for avoiding a vortex ring state based on the current state of the aircraft (e.g., based on the current altitude and the current descent rate or terminal velocity). For example, the flight control computer 106 may utilize one or more onboard cameras, navigational databases, terrain databases, obstacle databases and/or the like to identify a suitable landing location for the controlled slow-down operating mode that is substantially flat or otherwise suitable for landing the UAV that is at least a threshold lateral distance away from the current lateral position of the UAV to allow for a lateral speed or lateral trajectory that allows for the UAV to escape from a vortex ring state.

Thereafter, to optimize or otherwise regulate the position and velocity of the UAV while minimizing power consumption, the MPC control scheme of the flight control computer 106 may be implemented using a Finite Horizon Linear Quadratic Regulator (FH-LQR) represented by the following set of equations, where the equations of $P_x$, $P_u$ and $P_{xN}$ correspond to constraints representing the flight envelope and limitations on the translational states and power input:

$$V_N^0\big(x(k)\big) = \min_{u(k)} \sum_{i=0}^{N-1} x^T(k + i \mid k)Qx(k + i \mid k) + u^T(k + i \mid k)Ru(k$$

$$+ i \mid k) + x^T(k + N \mid k)Px(k + N \mid k)$$

s.t.

$$x(k + i + 1 \mid k) = Ax(k + i \mid k) + Bu(k + i \mid k)$$

$$x(k \mid k) = x(k);$$

$$P_x x(k + i \mid k) \leq q_x;$$

$$P_u u(k\ +\ i\ |\ k)\ \leq\ q_x;$$

*and*

$$P_{x_N} x(k\ +\ N\ |\ k)\ \leq\ q_{x_N}.$$

The MPC control scheme then optimizes the translational state and energy input parameters in a closed-loop manner by predicting the future trajectories at future time states $k+1$ to $k+N$ as a function of the current aircraft state $x(k)$ and power inputs $u(k)$ to $u(k+N-1)$ and optimizing the sequence of power inputs $u(k)$ to $u(k+N-1)$ to minimize the value of the cost function $J$. After minimizing the cost function value of $J$, the flight control computer 106 utilizes the calculated power input $u(k)$ corresponding to the minimized value of $J$ to determine corresponding actuation commands for operating the actuation systems 102 at the current state $k$ until the next update. Thereafter, the flight control computer 106 obtains the updated aircraft state resulting from the optimized power input to update the current aircraft state $x(k)$ and repeats the steps of predicting the future trajectory and optimizing the cost function to identify the optimized power input to be applied, and so on, until touchdown.

Referring to FIGS. 1-3, in one or more exemplary implementations, the two-stage energy prolongation landing procedure of the forced landing process 200 is utilized as a backup or secondary forced landing process in the context of a UAV when the amount of remaining available energy appears to be insufficient for completing a primary forced landing process for the UAV. For example, when the battery level for the battery onboard the UAV is insufficient to complete execution of a flight plan (e.g., due to meteorological conditions or other dynamic factors), the flight control computer 106 may automatically initiate a fixed speed forced landing strategy where the flight control computer 106 operates the UAV to descend with a vertical speed that is less than or equal to a fixed maximum vertical speed threshold (e.g., 3-4 meters per second) that is chosen to maintain stability and avoid vortex ring state while allowing an operator of the UAV to maintain manual lateral control over the UAV trajectory laterally. Thereafter, if the battery level for the battery onboard the UAV falls below the expected state of charge required for landing the UAV from its current altitude using the fixed speed forced landing strategy (e.g., task 204), the flight control computer 106 may automatically initiate the two-stage energy prolongation landing procedure by initially implementing the unregulated descent operating mode to allow the UAV to descend at a faster vertical speed. For example, in some implementations, the terminal velocity of the UAV may be as much as 14.5 meters per second or more, or three to four times the descent rate or vertical speed associated with the fixed speed forced landing strategy, thereby reducing potential energy of the UAV at a greater rate while conserving battery consumption. Thereafter, once the altitude of the UAV falls below a transition threshold, the flight control computer 106 transitions to the controlled slow-down operating mode to optimize consumption of the remaining available state of charge to land the UAV in a manner that minimizes the risks to the UAV and/or the payload. In this manner, the forced landing process 200 may be utilized to achieve failsafe operation of a UAV in the event of an unexpected lack of available energy.

For the sake of brevity, conventional techniques related to avionics systems, VTOL aircraft or other UAM vehicles, rotorcraft or other aircraft, fly-by-wire systems, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims.

Those of skill in the art will appreciate that the various illustrative logical blocks, modules, circuits, and algorithm steps described in connection with the embodiments disclosed herein may be implemented in varying ways for each particular application, but such implementation decisions should not be interpreted as causing a departure from the scope of the present invention. In addition, those skilled in the art will appreciate that embodiments described herein are merely exemplary implementations.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, the foregoing description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. For example, two elements may be coupled to each other physically, electronically, logically, or in any other manner, through one or more additional elements. Thus, although the drawings may depict one exemplary arrangement of elements directly connected to one another, additional intervening elements, devices, features, or components may be present in an embodiment of the depicted subject matter. In addition, certain terminology may also be used herein for the purpose of reference only, and thus are not intended to be limiting.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1.  A method of landing an aircraft, the method comprising

    determining an amount of available energy associated with an energy source onboard the aircraft is less than a predicted amount of energy required to land the aircraft in accordance with a procedure based on a current state of the aircraft; and
    thereafter:

        automatically operating one or more actuators associated with the aircraft to descend using an unregulated vertical speed using a first control scheme to regulate an orientation of the aircraft to a reference orientation; and
        thereafter, when an altitude of the aircraft is below a threshold, automatically operate the one or more actuators associated with the aircraft to descend using a second control scheme different from the first control scheme to regulate a lateral position of the aircraft to a trajectory to a landing location while regulating a velocity of the aircraft using a cost function.

2.  The method of claim 1, further comprising autonomously operating the one or more actuators associated with the aircraft to descend using a reference vertical speed associated with the procedure prior to determining the amount of available energy associated with the energy source onboard the aircraft is less than the predicted amount of energy while autonomously operating the one or more actuators associated with the aircraft to descend using the reference vertical speed.

3.  The method of claim 1, wherein the cost function is configured to minimize a three-dimensional velocity of the aircraft at touchdown at the landing location.

4.  The method of claim 1, wherein the cost function is configured to minimize energy consumption.

5.  The method of claim 1, wherein the first control scheme comprises a closed-loop control scheme configurable to regulate the orientation of the aircraft to a level flight orientation.

6.  The method of claim 5, wherein the closed-loop control scheme comprises a proportional-integral-derivative (PID) control scheme configurable to regulate a pitch of the aircraft to a zero pitch orientation and regulate a roll of the aircraft to a zero roll orientation.

7.  The method of claim 1, wherein the second control scheme comprises a model predictive control (MPC) scheme configurable to regulate a predicted position of the aircraft to the trajectory while minimizing a predicted vertical speed of the aircraft at the landing location.

8.  The method of claim 1, wherein the second control scheme comprises a model predictive control (MPC) scheme configurable to regulate a predicted position of the aircraft to the trajectory while regulating a predicted velocity of the aircraft to zero at touchdown at the landing location.

9. The method of claim 1, wherein the procedure comprises a flight plan or a fixed speed forced landing strategy.

10. The method of claim 1, further comprising determining the threshold based on a terminal velocity of the aircraft.

11. An aircraft system comprising:

an actuation system associated with one or more flight control components of an aircraft;
one or more avionics systems onboard the aircraft to provide data indicative of a current state of the aircraft;
one or more sensor systems to provide measurement data indicative of an amount of available energy associated with an energy source onboard the aircraft; and
a flight control module coupled to the actuation system, the one or more avionics systems and the one or more sensor systems to:

detect when the amount of available energy associated with the energy source onboard the aircraft is less than a predicted amount of energy required to land the aircraft based on the current state of the aircraft; and thereafter:

automatically operate the actuation system in accordance with an unregulated descent operating mode configurable to regulate an orientation of the aircraft to a reference orientation; and
after detecting a transition condition, automatically operate the actuation system in accordance with a controlled slow-down operating mode configurable to regulate a lateral position of the aircraft to a trajectory to a landing location while regulating a velocity of the aircraft using a cost function.

12. The aircraft system of claim 11, wherein the transition condition comprises an altitude of the aircraft is less than or equal to a threshold altitude influenced by a terminal velocity of the aircraft in the unregulated descent operating mode.

13. The aircraft system of claim 11, wherein the cost function is configured to minimize a three-dimensional velocity of the aircraft at touchdown at the landing location.

14. The aircraft system of claim 11, wherein the cost function is configured to minimize energy consumption.

15. The aircraft system of claim 11, wherein the unregulated descent operating mode comprises a proportional-integral-derivative (PID) control scheme configurable to regulate the orientation of the aircraft to a level flight orientation.

FIG. 1

EP 4 738 042 A1

200 — FORCED LANDING PROCESS

202 — PREDICT REQUIRED AMOUNT OF ENERGY TO LAND AIRCRAFT

204 — REQUIRED ENERGY AVAILABLE?

YES

NO

206 — OPERATE AIRCRAFT IN UNREGULATED DESCENT OPERATING MODE

208 — TRANSITION CONDITION?

NO

YES

210 — OPERATE AIRCRAFT IN CONTROLLED SLOW-DOWN OPERATING MODE

EXIT

# FIG. 2

R1
302

R4
308

R3
306

R2
304

FIG. 3

**EUROPEAN SEARCH REPORT**

Application Number

EP 25 20 8236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/075360 A1 (VON NOVAK WILLIAM HENRY [US]) 16 March 2017 (2017-03-16) | 1-3,5,6, 9-13,15 | INV. G05D1/485 |
| A | * paragraphs [0003], [0026], [0031] – [0034], [0036], [0050], [0054], [0058], [0065], [0067], [0069]; claims 1-2; figures 1-4 * | 4,7,8,14 | G05D1/85 G05D109/25 G05D1/654 |
| Y | US 2018/061247 A1 (BROWN STEPHAN [US] ET AL) 1 March 2018 (2018-03-01) * claims 1,9,16; figures 1,6 * | 1-3,5,6, 9-13,15 | |

-----

-----

**TECHNICAL FIELDS SEARCHED (IPC)**

G05D

The present search report has been drawn up for all claims

| Place of search | Date of completion of the search | Examiner |
|---|---|---|
| Munich | 18 November 2025 | Mallet, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 8236

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2025

| Patent document cited in search report | Publication date | Patent family member(s) | Publication date |
|---|---|---|---|
| US 2017075360 A1 | 16-03-2017 | NONE | |
| US 2018061247 A1 | 01-03-2018 | US 2018061247 A1<br>WO 2018044935 A1 | 01-03-2018<br>08-03-2018 |

EPO FORM P0459

For more details about this annex : see Official Journal of the European Patent Office, No. 12/82